# EUROPEAN PATENT APPLICATION

(11) **EP 4 769 765 A1**
(43) Date of publication of application: **01.07.2026**
(21) Application number: 25867216.1
(22) Date of filing: 10.09.2025
(51) Int. Cl.: H01M 50/367, H01M 10/6568, H01M 50/609, H01M 10/6554, H01M 10/613

(54) **BATTERY PACK**

(30) Priority: 29.10.2024 KR 20240150038
(71) Applicant: LG Energy Solution, Ltd., Seoul 07335 (KR)
(72) Inventor: CHANG, Hyuk Kyun, Daejeon 34122 (KR); KIM, Soo Youl, Daejeon 34122 (KR); PARK, Ju Hun, Daejeon 34122 (KR); PARK, Gi Chan, Daejeon 34122 (KR)
(74) Representative: Plasseraud IP
(86) International application number: PCT/KR2025/014129
(87) International publication number: WO 2026/095331

(57) **Abstract**

According to exemplary embodiments of the present disclosure, a battery pack that instantiates the technical concept of cooling from the upper side and venting gas from the lower side of the battery pack is provided. The battery pack includes: a pack case having a venting space; at least one battery unit stored inside the pack case above the venting space; and a cooling plate that seals an upper surface of the pack case, is tightly coupled to the battery unit, and has a cooling circulation flow path.

## Description

This application claims the benefit of Korean Patent Application No. 10-2024-0150038, filed on October 29, 2024, the disclosure of which is incorporated herein by reference.

### [Technical Field]

The present disclosure relates to a battery pack, and more specifically to a battery pack that instantiates the technical concept of upper cooling and lower venting, wherein cooling is performed from the upper side of the pack and venting is performed from the lower side of the pack.

### [Background]

With the increasing technological development and demand for mobile devices, electric vehicles, etc., the demand for secondary batteries as an energy source is rapidly increasing.

A secondary battery is a battery that can be repeatedly charged and discharged, and is installed as a battery pack by mounting a plurality of battery modules, each containing a plurality of battery cells stored in a module frame, in an electric vehicle or the like.

Recently, to increase the energy density of battery packs, Cell-to-Pack (CTP) type battery packs have been developed, wherein battery modules are omitted and battery cells are directly installed in the battery pack case to configure the battery pack.

In a battery pack, battery cells within the battery pack may be exposed to heat or flame during the charging and discharging process or due to external impact. When such an event occurs, the battery pack may lead to a chain explosion due to the thermal runaway phenomenon in which heat or flame generated in one battery cell propagates to adjacent battery cells.

To effectively respond to the thermal runaway phenomenon in battery packs, various cooling technologies and gas venting technologies are being applied to battery packs.

For example, Korean Patent Publication No. 10-2022-0070835 proposes a battery pack that directly injects cooling water from the upper side of the battery pack to an ignited battery cell to prevent the flame ignited in the battery cell within the battery pack from spreading.

However, in the case of existing battery packs, due to insufficient venting design technology, there has been a limitation in delaying thermal propagation to adjacent banks or adjacent modules because venting gas generated by thermal runaway cannot be appropriately isolated, guided, and discharged.

### [Summary]

### [Technical Problem]

In order to overcome the limitations of the prior art as described above, the present disclosure aims to provide a battery pack having the technical concept of an upper cooling and lower venting structure that can delay thermal propagation by directly injecting cooling water to the upper side of the battery pack when a thermal event occurs, and can also effectively suppress damage to normal modules by the cooling water injected into the battery pack during this process.

### [Technical Solution]

According to exemplary embodiments of the present disclosure for achieving the above-mentioned objectives, a battery pack that performs cooling from the upper side and vents gas from the lower side of the battery pack is provided.

The battery pack includes: a pack case having a venting space; at least one battery unit stored inside the pack case above the venting space; and a cooling plate sealing an upper surface of the pack case and coupled to the battery unit.

In the battery pack, the pack case includes: a base plate; a side plate surrounding the base plate; and a venting plate spaced apart from the base plate, wherein the venting space is provided at the lower part of the venting plate.

In the battery pack, the venting plate may have a plurality of opening part communicating between the battery unit and the venting space.

In the battery pack, the opening parts may be venting holes.

In the battery pack, the venting plate is an uneven-shaped plate with opening parts formed therein, and venting channels may be formed by the uneven shape.

In the battery pack, a venting device communicating with the venting space may be formed on a side surface of the pack case at a position higher than the position of the venting space.

In the battery pack, the cooling plate has water injection holes at positions facing the battery unit, and includes a fusible plug that closes the water injection holes.

In the battery pack, the fusible plug is melted by an abnormal temperature rise of the battery unit to open the water injection holes, and cooling water may flow out from the opened water injection holes and may be supplied to the battery unit.

In the battery pack, the cooling water injected into the battery unit may flow into the venting space.

In the battery pack, a water injection passage may be formed on an upper part of the battery unit at a position corresponding to the fusible plug.

In the battery pack, the battery unit is provided in plurality, and the water injection holes may be formed in equal numbers for each battery unit.

In the battery pack, the cooling plate has an inlet and an outlet through which cooling water flows in and out, and includes a cooling circulation flow path connected to the inlet and the outlet.

In the battery pack, the cooling circulation flow path is preferably a serpentine flow path that passes through the plurality of battery units at least once.

In the battery pack, the battery unit includes a battery module in which a cell assembly is accommodated.

In the battery pack, the battery unit includes a cell block of module-less structure in which at least a portion or all of an upper surface of the cell assembly is open.

### [Advantageous Effects]

The battery pack according to exemplary embodiments of the present disclosure can delay thermal propagation by directly injecting cooling water to the upper side of the battery pack when a thermal event occurs, and can also effectively suppress damage to normal modules by the cooling water injected into the battery pack during this process.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a schematic configuration diagram of a battery pack according to an exemplary embodiment of the present disclosure.
FIG. 2 is a schematic diagram for explaining the thermal propagation (TP) prevention effect in the battery pack of FIG. 1.
FIG. 3 is a schematic configuration diagram of a battery pack according to another exemplary embodiment of the present disclosure.
FIG. 4 is a schematic diagram for explaining the thermal propagation (TP) prevention effect in the battery pack of FIG. 3.
FIG. 5 is a schematic plan view of the cooling plate of the battery pack of FIG. 3.
FIG. 6 is a schematic plan view of another cooling plate of the battery pack of FIG. 3.
FIG. 7 is an exploded perspective view of a battery pack according to another exemplary embodiment of the present disclosure.
FIG. 8 is a detailed exploded perspective view of the battery module of FIG. 7.
FIG. 9 is a partial front sectional view of FIG. 7.
FIG. 10 is a schematic configuration diagram of another battery pack according to an exemplary embodiment of the present disclosure.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

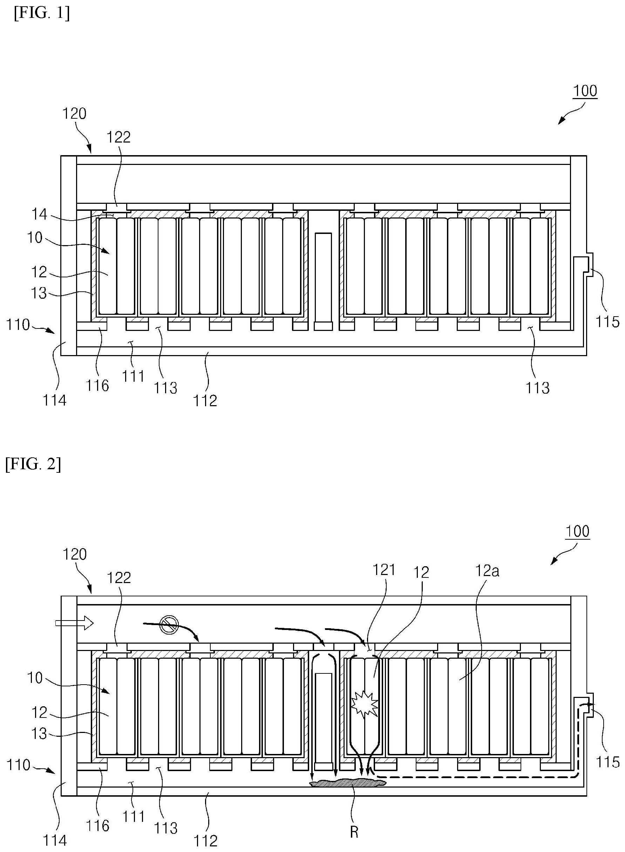

FIG. 1 is a schematic configuration diagram of a battery pack 100 according to an exemplary embodiment of the present disclosure, and FIG. 2 is a schematic diagram for explaining the thermal propagation (TP) prevention effect in the battery pack 100 of FIG. 1.

In FIG. 1, the battery pack 100 of the present disclosure schematically shows a lower venting structure in which venting gas is discharged from the venting space 111 on the lower side along with upper cooling that directly injects cooling water from the upper side.

Referring to the drawings, the battery pack 100 according to the present embodiment includes a pack case 110 having a venting space 111, at least one battery unit 10 stored inside the pack case 110 above the venting space 111, and a cooling plate 120 that seals the upper surface of the pack case 110 and is coupled to the battery unit 10.

The pack case 110 may include a base plate 112, a side plate 114 surrounding the base plate 112, and a venting plate 116 spaced apart from the base plate 112.

In the case of the battery pack 100 according to the present embodiment, the pack case 110 forms a venting space 111 at the lower part of the venting plate 116.

In the battery pack 100 according to the present embodiment, the venting plate 116 may have a plurality of opening parts 113 communicating between the battery unit 10 and the venting space 111. The opening parts 113 may have various shapes such as rectangular holes or slots, and in this embodiment, venting holes are exemplified.

In the pack case 110, a venting device 115 may be formed on the side surface of the pack case 110 at a position higher than the position of the venting space 111 and communicating with the venting space 111. The venting device 115 may include a venting valve. The venting device 115 is provided at a position higher than the venting space 111 to facilitate the discharge flow of venting gas.

In the battery pack 100 according to the present embodiment, the cooling plate 120 has a plurality of water injection holes 121 at positions facing the battery unit 10, and includes a fusible plug 122 that closes the water injection holes 121. The fusible plug 122 may be made of a material that melts by high-temperature gas or sparks emitted from the battery cell 12.

The fusible plug may be made of a thermoplastic polymer resin having a melting point of about 200°C or less, and for example, the thermoplastic polymer resin may use materials having a melting point of about 100°C or more and 200°C or less, such as polyethylene or polypropylene.

When the battery unit 10 is in a normal state, the fusible plug 122 is maintained in a state of closing the water injection hole 121, but when a thermal event occurs, the fusible plug 122 melts due to the abnormal temperature rise of the battery unit 10, the water injection hole 121 is opened, and cooling water flows out from the opened water injection hole 121 and is supplied to the battery unit 10. When the battery unit 10 ignites, the cooling water is partially vaporized and increases in volume to become a high-pressure state, so when the water injection hole 121 is opened, it will be injected with strong pressure toward the ignited battery unit 10.

The cooling water injected into the battery unit 10 may pass through the opening part 113 of the venting plate 116 and flow into the venting space 111 of the pack case 110.

In addition, in the battery pack 100 according to the present embodiment, a water injection passage 14 may be formed on the upper part of the battery unit 10 at a position corresponding to the fusible plug 122. The upper surface of the module frame 13 of the battery unit 10 is in close contact with the lower part of the cooling plate 120, and the water injection passage 14 may be positioned at a position corresponding to the water injection hole 121 of the cooling plate 120.

In the battery pack 100 according to the present embodiment, since the battery unit 10 may be provided in plurality, the water injection holes 121 may be formed in equal numbers for each battery unit 10.

In the battery pack 100 according to the present embodiment, the cooling plate 120 is illustrated like a water tank, but for efficient cooling, a cooling flow path may be formed inside the cooling plate 120 as in other embodiments described later.

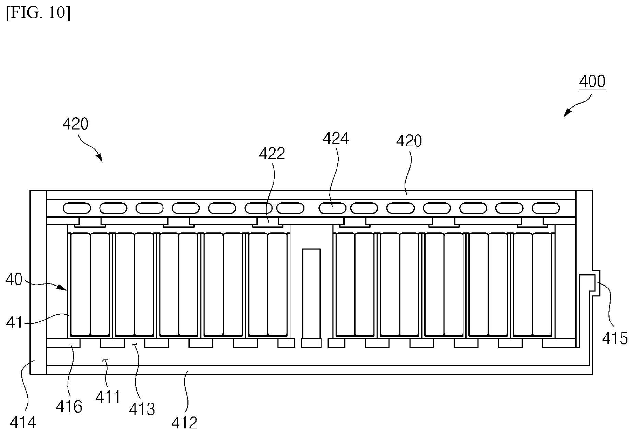

Meanwhile, the battery pack 100 of the present disclosure may be a battery pack including a battery module in which the battery unit 10 accommodates a cell assembly, or may be a battery pack including a cell block of module-less structure (see FIG. 10) in which at least a portion or all of the upper surface of the cell assembly is open.

The battery unit 10 may include a plurality of battery cells 12. Each individual battery cell 12 is the basic unit of a secondary battery. Each individual battery cell 12 may include an electrode assembly, an electrolyte, and a cell case.

The plurality of battery cells 12 may be connected in series and/or in parallel. For example, the plurality of battery cells 12 may be connected to each other in series. For example, the plurality of battery cells 12 may be connected to each other in parallel. For example, when a set of two or more battery cells 12 connected to each other in parallel is defined as a bank, one bank consisting of two or more battery cells 12 connected to each other in parallel and another bank consisting of two or more battery cells 12 connected to each other in parallel may be connected in series.

Each individual battery cell 12 may correspond to a pouch-type battery cell, a cylindrical battery cell, or a prismatic battery cell.

In exemplary embodiments, each individual battery cell 12 corresponds to a pouch-type battery cell, and within one cell assembly, the plurality of battery cells 12 may be mutually stacked in one direction.

Hereinafter, a situation in which the thermal runaway (TR) phenomenon occurs in the battery pack 100 according to the present embodiment will be described with reference to FIG. 2.

As shown in FIG. 2, in the case of the battery pack 100 of the present disclosure, when heat or flame is generated in any one of the battery cells 12 of the battery unit 10, the fusible plug 122 of the cooling plate 120 at the position facing the corresponding battery cell 12 will melt and the water injection hole 121 will be opened.

Next, as indicated by the arrows in FIG. 2, cooling water is directly injected from the opened water injection hole 121 and supplied to the ignited battery cell 12. Through this selective water injection operation, the ignited battery cell 12 can be rapidly cooled, and the flame can be prevented from spreading to adjacent battery cells 12a. Accordingly, thermal propagation to adjacent battery cells 12a can be delayed to reliably suppress the thermal runaway phenomenon of the battery cell 12.

And the cooling water injected into the battery unit 10 passes through the opening part 113 of the venting plate 116, is discharged to the lower venting space 111, and residual cooling water (R) accumulates on the base plate 112. At this time, the residual cooling water (R) may include not only the used cooling water but also other discharge materials.

In the present disclosure, due to the structure forming the lower venting space 111 of the battery pack 100, the cooling water used for water injection does not remain in the ignited battery cell 12, so short-circuiting of the battery cell 12 can be prevented. In addition, since the residual cooling water (R) is not used in the adjacent battery cell 12a, secondary events caused by the residual cooling water (R) can be prevented in advance.

Moreover, in the battery pack 100 of the present disclosure, the gas generated in the battery cell 12 is guided through the venting space 111 of the base plate 112 and the side plate 114 and can be rapidly discharged to the outside by the venting device 115 formed higher than the venting space 111.

### (Second embodiment)

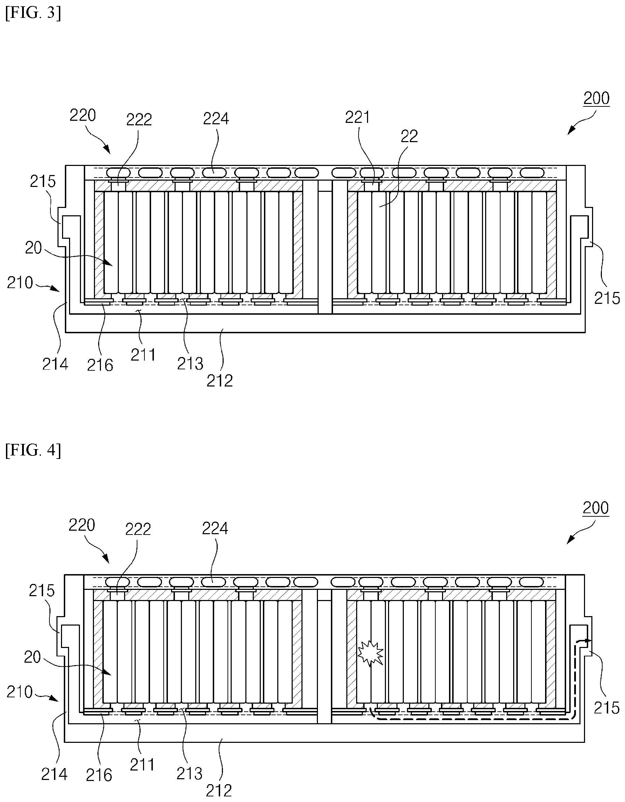

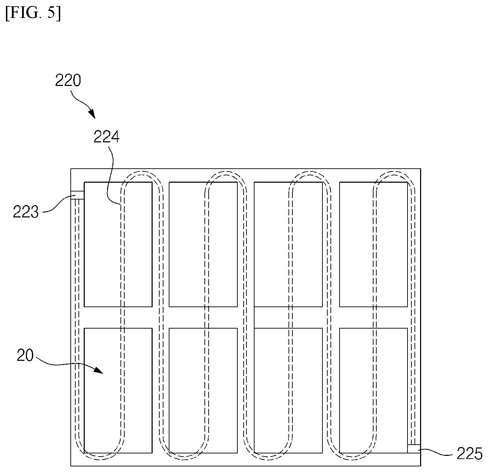

FIG. 3 is a schematic configuration diagram of a battery pack 200 according to another exemplary embodiment of the present disclosure, FIG. 4 is a schematic diagram for explaining the thermal propagation (TP) prevention effect in the battery pack 200 of FIG. 3, and FIG. 5 is a schematic plan view of the cooling plate 220 of the battery pack 200 of FIG. 3.

Referring to FIGS. 3 to 5, the battery pack 200 according to the second embodiment includes a pack case 210 having a venting space 211, at least one battery unit 20 stored inside the pack case 210 above the venting space 211, and a cooling plate 220 that seals the upper surface of the pack case 210 and is tightly coupled to the battery unit 20, similar to the battery pack 100 of the first embodiment, and duplicate descriptions thereof will be omitted.

The cooling plate 220 according to the second embodiment may be coupled to the battery pack case 210 in a form that covers the open upper surface of the battery pack case 210, similar to the cooling plate 120 of the first embodiment.

In the battery pack 200 according to the second embodiment, the pack case 210 forms a venting space 211 at the lower part the venting plate 216. The venting plate 216 may have a plurality of opening parts 213 communicating between the battery unit 20 and the venting space 211.

In the pack case 210, a venting device 215 may be formed on the side surface of the pack case 210 at a position higher than the position of the venting space 211 and communicating with the venting space 211.

Unlike the battery pack 100 according to the first embodiment, the battery pack 200 according to the second embodiment further includes various cooling circulation flow paths 224 in the upper cooling plate 220.

In the battery pack 200 according to the second embodiment, the cooling plate 220 may have an inlet 223 and an outlet 225 through which cooling water flows in and out, and a cooling circulation flow path 224 through which cooling water is guided may be connected to the inlet 223 and the outlet 225.

As shown in FIG. 5, the cooling circulation flow path 224 may be formed inside the cooling plate 220 as a serpentine flow path that passes through the plurality of battery units 20 at least once.

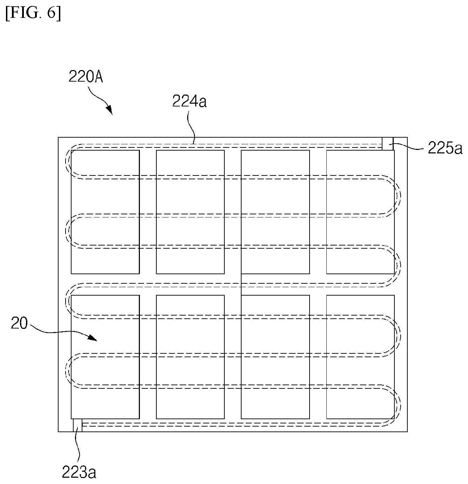

FIG. 6 is a schematic plan view of another cooling plate 220A of the battery pack 200 of FIG. 5, exemplarily showing that it can be installed in a different direction from the cooling circulation flow path 224 of FIG. 5. The cooling circulation flow path 224a is preferably a serpentine flow path that passes through the plurality of battery units 20 at least once, and the arrangement design is not particularly limited and can be made in various ways.

The cooling plate 220 includes a fusible plug 222 that closes a plurality of water injection holes 221 at positions facing the battery unit 20. As shown in FIG. 3, the fusible plug 222 is melted by an abnormal temperature rise of the battery unit 20 to open the water injection hole 221, and cooling water flows out from the opened water injection hole 221 and is supplied to the battery cell 22. The cooling water injected into the battery cell 22 may pass through the opening part 213 of the venting plate 216 and flow into the venting space 211 of the pack case 210.

Similarly, in the battery pack 200, the gas generated in the battery cell 22 is guided to the venting space 211 through the base plate 212 and the side plate 214 and can be rapidly discharged to the outside by the venting device 215 formed higher than the venting space 211.

### (Third embodiment)

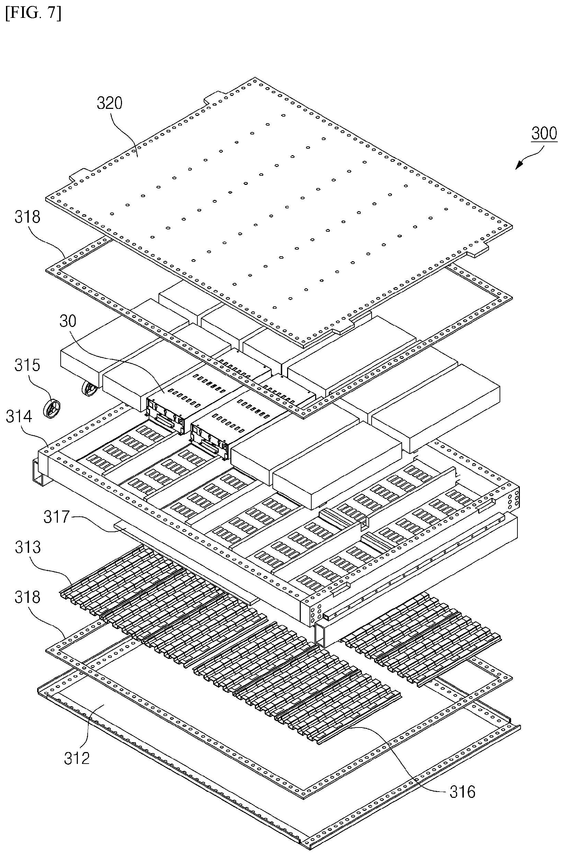

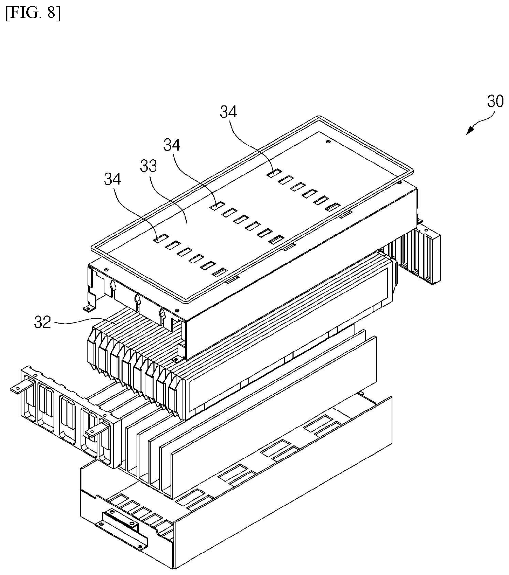

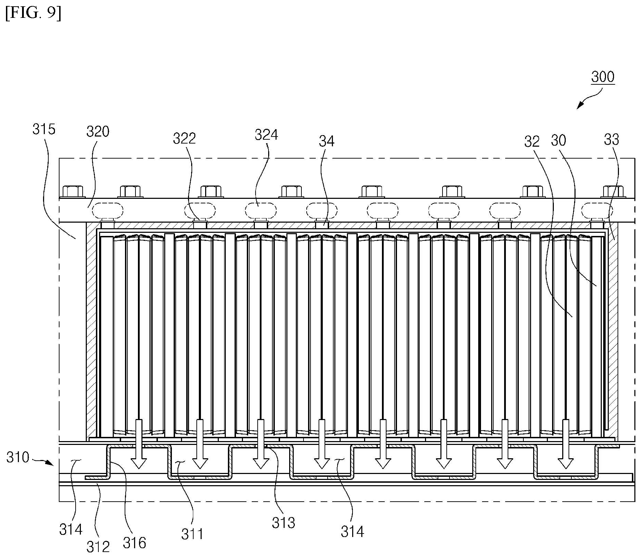

FIG. 7 is an exploded perspective view of a battery pack 300 according to another exemplary embodiment of the present disclosure, FIG. 8 is a detailed exploded perspective view of the battery unit 30 of FIG. 7, and FIG. 9 is a partial front sectional view of FIG. 7.

Referring to the drawings, the battery pack 300 according to the third embodiment includes a pack case 310 having a venting space 311, at least one battery unit 30 stored inside the pack case 310 above the venting space 311, and a cooling plate 320 that seals the upper surface of the pack case 310 and is coupled to the battery unit 30, similar to the battery pack 200 of the second embodiment, and duplicate descriptions thereof will be omitted.

In the battery pack 300 according to the third embodiment, gaskets 318 are positioned on the upper edge of the base plate 312 and the lower edge of the cooling plate 320 to completely seal the battery pack 300. As a result, the battery pack 300 may be coupled such that the cooling plate 320 and the pack case 310 are in close contact.

In the battery pack 300 according to the third embodiment, the battery unit 30 may be a battery module in which a battery cell 32 is accommodated in a module frame 33. In the battery module, the upper surface of the module frame 33 is in close contact with the lower part of the cooling plate 320, and the water injection passage 34 may be positioned at a position corresponding to the fusible plug 322 of the cooling plate 320.

In the battery pack 300 according to the third embodiment, the pack case 310 forms a venting space 311 at the lower part of the venting plate 316. The venting plate 316 may have a plurality of opening parts 313 communicating between the battery unit 30 and the venting space 311.

The venting plate 316 is an uneven-shaped plate with opening parts 313 formed therein, and as shown in FIGS. 7 and 9, may be a plate shape in which several C-shaped or ⊏-shaped channels are repeatedly connected upside down. Venting channels 314 may be formed long in the longitudinal direction (perpendicular to the drawing) of the battery cell 32 by the uneven shape. In addition, the venting channels 314 are connected in a direction perpendicular to the venting main channel 317 to guide the venting gas in one direction.

In the battery pack 300 according to the third embodiment, when a thermal event occurs, cooling water is injected into the ignited battery cell 32, and the cooling water injected into the ignited battery cell 32 may pass through the opening part 313 of the venting plate 316 and flow into the venting space 311 of the pack case 310.

And the venting gas passes through the opening part 313 of the venting plate 316, is guided to the venting channel 314 forming the venting space 311, passes through the venting main channel 317 communicating with each venting channel 314, and can be discharged to the venting device 315.

### (Fourth embodiment)

FIG. 10 is a schematic configuration diagram of another battery pack 400 according to an exemplary embodiment of the present disclosure.

Referring to the drawings, the battery pack 400 according to the fourth embodiment includes a pack case 410 having a venting space 411, at least one battery unit 40 stored inside the pack case 410 above the venting space 411, and a cooling plate 420 that seals the upper surface of the pack case 410 and is tightly coupled to the battery unit 40, similar to the battery pack 200 of the second embodiment, and duplicate descriptions thereof will be omitted.

The battery pack 400 according to the fourth embodiment includes a cooling plate 420 having a cooling circulation flow path 424 and a fusible plug 422, like the battery pack 200 of the second embodiment.

In addition, the battery pack 400 according to the fourth embodiment exemplifies a CTP (Cell-to-Pack) method including a cell block of module-less structure in which at least a portion or all of the upper surface of the cell assembly 41 is open.
Therefore, the battery pack of the present disclosure instantiating the technical concept of upper cooling and lower venting is applicable to both a battery pack including a battery module and a Cell-to-Pack (CTP) type battery pack in which the battery module is omitted.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. A battery pack comprising:
a pack case having a venting space;
at least one battery unit stored inside the pack case above the venting space; and
a cooling plate sealing an upper surface of the pack case and coupled to the battery unit.

2. The battery pack of claim 1, wherein
the pack case comprises:
a base plate;
a side plate surrounding the base plate; and
a venting plate spaced apart from the base plate, wherein
the venting space is provided at the lower part of the venting plate.

3. The battery pack of claim 2, wherein
the venting plate has a plurality of opening part communicating between the battery unit and the venting space.

4. The battery pack of claim 3, wherein
the opening parts are venting holes.

5. The battery pack of claim 2, wherein
the venting plate is an uneven-shaped plate with opening parts formed therein, and venting channels are formed by the uneven shape.

6. The battery pack of claim 1, wherein
a venting device communicating with the venting space is formed on a side surface of the pack case at a position higher than the position of the venting space.

7. The battery pack of claim 1, wherein
the cooling plate has water injection holes at positions facing the battery unit, and comprises a fusible plug that closes the water injection holes.

8. The battery pack of claim 7, wherein
the fusible plug is melted by an abnormal temperature rise of the battery unit to open the water injection holes, and cooling water flows out from the opened water injection holes and is supplied to the battery unit.

9. The battery pack of claim 7, wherein
the cooling water injected into the battery unit flows into the venting space.

10. The battery pack of claim 7, wherein
a water injection passage is formed on an upper part of the battery unit at a position corresponding to the fusible plug.

11. The battery pack of claim 7, wherein
the battery unit is provided in plurality, and
the water injection holes are formed in equal numbers for each battery unit.

12. The battery pack of claim 1, wherein
the cooling plate has an inlet and an outlet through which cooling water flows in and out, and comprises a cooling circulation flow path connected to the inlet and the outlet.

13. The battery pack of claim 12, wherein
the cooling circulation flow path is a serpentine flow path that passes through the plurality of battery units at least once.

14. The battery pack of claim 1, wherein
the battery unit comprises a battery module in which a cell assembly is accommodated.

15. The battery pack of claim 1, wherein
the battery unit comprises a cell block of module-less structure in which at least a portion or all of an upper surface of the cell assembly is open.
